(19) Europäisches Patentamt
European Patent Office
Office européen des brevets

(11) **EP 1 914 909 A1**

(12) **EUROPEAN PATENT APPLICATION**

(43) Date of publication:
**23.04.2008   Bulletin 2008/17**

(51) Int Cl.:
*H04B 7/06* (2006.01)        *H04B 17/00* (2006.01)

(21) Application number: **06425729.8**

(22) Date of filing: **20.10.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Nokia Siemens Networks GmbH & Co. KG**
**81541 München (DE)**

(72) Inventors:
• **Moretti, Lino**
  **20128 Milano (IT)**
• **Sorrentino, Stefano**
  **20133 Milan (IT)**
• **Spagnolini, Umberto**
  **20046 Biassono (IT)**

(54)    **Downlink scheduling method for MIMO/MISO cellular systems with limited feedback signalling**

(57)    The proposed scheduling algorithm improves the throughput on broadcast (downlink) channel in multi-user cellular systems, where both MISO and MIMO MSs can be accommodated in the cell in a totally transparent way. The method works as follows:

1. Every MS estimates a SINR threshold $\alpha_k$ independently to each another, according to an Equal Probability criterion a report signalling is triggered by user $k$.

2. On every time slot the BS generates a random set of orthogonal beamforming vectors $S=[s_1...s_M]$.

3. Every MS estimates its equivalent channels set $\{q_{k,m} = H_k s_m\}$ and its SINR $\gamma_{k,m}$ on every beam $s_m$ during a downlink (DL) training phase.

4. Every MS finds its best beam index

$$\hat{m}_k = \arg\max_m \{\gamma_{k,m}\} \quad \text{and compares} \quad \gamma_{k,\hat{m}_k} \quad \text{with its}$$

threshold $\alpha_k$. If $\gamma_{k,\hat{m}_k} \geq \alpha_k$ the k-th MS signals to the

BS the best-beam index $\hat{m}_k$ during the uplink (UL)

phase, otherwise it signals beam-index 0, so the UL feedback per user is $\log_2 (M + 1)$ bits long.

5. The BS schedules on each beam at most one user among those that report a feedback on that beam. The user may be chosen randomly among those that report a feedback on beam m or preferably according to a Proportional Rate metric. In the event that no user gives feedback on a certain beam, the BS does not schedule any data flow on that beam.

6. The BS transmits on every scheduled beam.

Comparison of the sum-rate of EP with a RS corresponding to the $P_{out}$ given by Eq.19

$M = 4$; $N_k = 4$; $\rho_k = [0..20]$ dB

LEGENDA

| | | | | | |
|---|---|---|---|---|---|
| Ⓐ | K = 10 | Ⓔ | K = 200 | ◯ | $P_{out}$ by Eq.19 |
| Ⓑ | K = 20 | Ⓕ | K = 500 | ✳ | $P_{out}$ by Eq.20 |
| Ⓒ | K = 50 | Ⓖ | K = 1000 | ☐ | Optimal $P_{out}$ |
| Ⓓ | K = 100 | | | | |

Fig. 2

**Description**

**FIELD OF THE INVENTION**

The present invention relates to the field of telecommunication networks, and more precisely to a downlink (DL) scheduling method for MIMO / MISO cellular systems with limited feedback signalling triggered by exceeding a SINR threshold independently estimated by the mobile stations. The meaning of used acronyms are reported in **APPENDIX D** at the end of the description.

**BACKGROUND ART**

Researchers have recently focused the attention on the improvement of throughput performances on broadcast (downlink) channel in multi-user cellular systems, where the Base Stations (BS), and eventually the Mobile Stations (MS), employ multiple antennas. References **[1]** to **[9]** to the most relevant background art are reported in **APPENDIX C** at the end of the description.

In **[Ref.1]** the authors demonstrate that for a system with M transmitting antennas, N receiving antennas and K users the optimal performance is achieved by Dirty Paper Coding (DPC) described in **[Ref.2],** with a sum-rate scaling law of $M$ loglog($NK$) described in **[Ref.3]**, Anyway DPC is not practical as it requires the instantaneous full Channel State Information (CSI) at the BS. The need for partial-CSI and computationally-effective transmission schemes led to several nearly-optimal algorithms.

In **[Ref.4]** the authors proposed to use a random transmit beamforming beam in MISO systems, to leverage maximal diversity gain in a densely populated cell. The transmit beamforming is regularly updated, to improve multi-user diversity. During a training phase, each receiver measures its received SNR on the beamforming vector currently employed by the BS, and feeds it back to the BS on an UL signalling channel. Scheduling is performed by the BS with a proportional fair scheduler (PFS), choosing the best user with regards to MSs' feedbacks and to fairness constraints. The feedback given by each user consists of its SNR (one real value per active user per channel/beamforming realization). This scheme allows high multi-user diversity and beamforming gains, but does not employ multiplexing gain.

In **[Ref.5]** the authors proposed to extend the [Ref.4] approach to spatial multiplexing in MISO and MIMO systems. The BS with M antennas transmits M random orthogonal beams. Every user measures its SINR on each beam, and reports the best value and the corresponding beam index to the BS (one real number + log2(M+1) bits of feedback per user). The model is analysed with regards to asymptotic capacity. Fairness in the resource assignment and scheduling are considered under very simplified conditions, which are unacceptable for real systems. An Opportunistic-SDMA (O-SDMA) scheme was proposed to asymptotically achieve for $K \rightarrow \infty$ the sum-rate scaling law of DPC with low required feedback, for example, lower than that of full-CSI zero-forcing SDMA schemes of **[Ref.6]**.

In **[Ref.7]** and **[Ref.8]** the authors proposed to modify the [Ref.5] scheme, limiting the feedback to one bit per active user. Every user compares its SINR with a certain threshold, and reports logic 1 if the received SINR exceeds that threshold or 0 if the SINR is below the threshold. The system model is exactly the same as in [Ref.5]. This leads to an unrealistic solution, which is by the way useful for analytical studies. The proposed threshold is a network parameter equal for all users, it is suboptimal and holds only when asymptotically infinite users are in the cell. The scheme at [Ref. 7-8] becomes also less efficient when M is high, because the received SINR is evaluated on an arbitrary transmit beam only.

In **[Ref.9]** the authors analyze the performance of a scheme similar to that of [Ref.4], with a reduced feedback approach. Users give feedback (which consists of a real number) only when their SNR exceeds a certain threshold, which is evaluated in a distributed way. Anyway no explicit algorithms or closed-form are proposed in the article for the evaluation of the optimal threshold.

**OBJECTS OF THE INVENTION**

In view of the presented state of the art, it is an object of the present invention to provide each MS with an algorithm for estimating its own SINR threshold for the aim of triggering a limited feedback to the BS in support of the BS's activity of scheduling the transmissions on the broadcast channel (downlink). The estimating algorithm should take into account throughput and fairness requirements in a realistic scenario, where single and multiple antennas terminals coexist in the cell, and where channels are unbalanced for different users, and no signalling by the base station is requested.

Another object of the present invention is that to provide the BS with a new scheduling algorithm exploiting the previous concepts developed for the distributed thresholds together with additional fairness constraints to share the sum-rate among active users. In the following description terms as mobile station MS and the respective user are considered to have an equivalent meaning.

## SUMMARY OF THE INVENTION

The invention achieves said objects by providing in a cellular communication system a method for scheduling downlink transmissions, subdivided in time slots, from $M$ beamforming antennas connected to base station towards $K$ mobile stations equipped with an arbitrary number $N_k$ of receiving antennas, including the following steps:

a) under the assumption of a probability $\overline{F}$ equal for every beam m and for every user $k$ to transmit a feedback signalling, estimating, by every mobile station $k$ independently to each another an individual SINR threshold $\alpha_k$

using the following equation: $\dfrac{e^{-\frac{\alpha_k}{\rho_k}}}{\left(1+\alpha_k\right)^{M-1}} = 1-\left(P_{out}\right)^{\frac{1}{KN_k}}$ , being $\{\rho_k\}$ the average power received by the user

$k$ , and $P_{out}$ a system parameter corresponding to the scheduling outage probability, that is, the probability that no user exceeds its threshold on a given beam;

b) generating on every time slot, by the base station, a random set of orthogonal beamforming signal vectors **S** = [**s_1** ... **s_M**];

c) estimating, by every mobile station its relevant SINR value $\gamma_{k,m}$ on every beam **s_m** during a downlink training step;

d) calculating, by every mobile station, its best beam-index $\hat{m}_k$ as $\hat{m}_k = \arg\max\limits_{m}\left\{\gamma_{k,m}\right\}$;

e) comparing, by each mobile station, its best SINR value $\gamma_{k,\hat{m}k}$ with its own threshold $\alpha_k$;

f) signalling to the base station, by every mobile station by which $\gamma_{k,\hat{m}k} \geq \alpha_k$ is valid, the best beam-index $\hat{m}_k$ during a feedback uplink transmission, otherwise signalling a beam-index null;

g) selecting, by the base station, on each beam $m$ at most one mobile station among those reporting a non-null signalling on that beam;

h) transmitting, by the base station, to the selected users with conservative rates $\log(1 + \alpha_{k_m^*})$ expressible in bit/s/Hz, where $k_m^*$ is the user eventually scheduled on beam m ;

i) repeating from step a) if a remarkable change in $\{\rho_k\}$ by user $k$ or in the number of active users $K$ is occurred within the last time slot, otherwise repeating from step b), as disclosed in claim 1.

Moreover, considering that:

- the BS does not have any knowledge about the instantaneous user channel realizations $\{\mathbf{H}_k\}$, and
- the mean channel power $\rho_k$ can be obtained by the BS either using explicit feedback from the MS or estimated during the uplink if the system is TDD,

it descends that the base station, using the same threshold estimating algorithm previously described, is able to calculate by itself the entire set of thresholds $\{\alpha_k\}$ so as to transmit the set to the mobile stations, that are so prevented to calculate their individual threshold from themselves, simplifying the firmware and saving costs.

So another object of invention is a method for scheduling downlink transmissions by which the whole set of reporting thresholds $\{\alpha_k\}$ is calculated by the base station and transmitted to the mobile stations, as described in an independent claim 2. The calculation of the whole set of thresholds $\{\alpha_k\}$ by both the base station and the mobile stations is another possibility.

Additional features of the present invention which are believed to be novel are set forth with particularity in the appended claims.

According to some other aspects of the invention:

• The threshold set $\{\alpha_k\}$ depends on a long-term statistic, so there is no need to often update it.

• Since $\{\rho_k\}$ are slowly varying, their update rate can be low, so we can neglect the impact of their signalling on the overall uplink throughput.

• The first member of the equation for determining the threshold $\alpha_k$ increases monotonically with $\alpha_k$ .

• We assume that each MS knows the number $K$ of active users in the cell and has perfect knowledge of all the equivalent channel vectors $\{\mathbf{q}_{k,m} = \mathbf{H}_k\mathbf{s}_m\}$, obtained, i.e. during DL preamble equalization.

- A closed-form lower-bound $\tilde{\alpha}_k$ for the SINR threshold $\alpha_k$ valid for random scheduling can be calculated by the following expression:

$$\tilde{\alpha}_k\left(P_{out}\right) = -\frac{\log\left(1 - P_{out}^{\frac{1}{KN}}\right)}{M + \frac{1}{\rho_k} - 1} < \alpha_k\left(P_{out}\right) \quad .$$

- The user may be chosen randomly by the base station among those that report a feedback on beam $m$ or preferably according to a scheduling metric. In the event that no user gives feedback on a certain beam, the BS does not schedule any data flow on that beam. Profitably, a Proportional Rate Scheduling (PRS) algorithm is used by which every user which report with equal probability (EP) is expected to receive on the average a given fraction $\overline{R}_k$ of the sum-rate $R_{SUM}$ (corresponding the overall throughput from the BS expressible in bit/s/Hz), so that the average rate of user $k$ in bit/s/Hz is $R_k = \overline{R}_k R_{SUM} \; \forall k \in [1, K]$. The PRS algorithm finds the set $\{P^S(k)\}$ that maximizes the sum-rate under the EP constraints, being $P^s(k)$ the scheduling probability of user $k$.

- The BS transmits to a scheduled user $k$ with a conservative rate $\log(1+\alpha_{k_m*})$ lower than Shannon's limit $\log(1+\gamma_{k,\hat{m}_k})$, but this is not a limitation and a greater rate can be used especially in case the individual threshold $\alpha_k$ is largely exceeded.

- The transmission rate can be adjusted to meet the variability on the set of thresholds $\{\alpha_k\}$ by selecting one among various possible Modulation and Coding Schemes (MCS). In particular, an MCS can be selected according to the threshold $\alpha_{k_m*}$,

where $k_m{}^*$ is the user eventually scheduled on beam $m$ .

## ADVANTAGES OF THE INVENTION

The method of the invention is shown to perform nearly optimally in terms of sum-rate when many users are in the cell, even if a very low feedback (signalling) rate is employed on the UL channel.
The method in subject is able to accomplish fairness in terms of predefined sum-rate fractions. Conversely, realistic fairness constraints have been neglected in opportunistic-SDMA approaches so far.
The subjected method can easily accommodate both MISO and MIMO MSs in the cell, in a totally transparent way; this is not so straightforward in some competitor algorithms.
The subjected method is distributed, so no particular knowledge about the MS receiver performances is needed at the BS.

## BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:

- **fig.1** shows a MIMO system model suitable for implementing the downlink scheduling method of the present invention;
- **figures 2** to **6** shows some comparative curves of simulation results achievable by the downlink scheduling method of the present invention.

## DETAILED DESCRIPTION OF AN EMBODIMENT OF THE INVENTION

In order to better clarify the complex arguments of the description, it is subdivided in the following Sections:

- SYSTEM MODEL - to introduce the system model.

- EP ALGORITHM - to present the general solution of the Equal Probability algorithm. Includes a subsection A - THRESHOLD CALCULATION FOR MIMO NETWORKS.

- EVALUATION OF THE OUTAGE PROBABILITY - to show that EP achieves the asymptotical scaling law of DPC and we evaluate the optimal thresholds and nearly-optimal thresholds with a simplified closed-form solution for a finite users number. Includes subsection A - SCALING LAW OF THE SUM RATE and subsection B - OPTIMAL OUTAGE PROBABILITY.

- FAIRNESS CONSTRAINTS - to introduce fairness constraints.

- SCHEDULING ALGORITHM - to propose the PRS algorithm.

- NUMERICAL RESULTS - to numerically validate the analysis through simulations.

- CONCLUSIONS - to draw the conclusions.

- APPENDIX A - to calculate a lower-bound $\tilde{\alpha}_k$ in closed-form for the EP SINR threshold $\alpha_k$.

- APPENDIX B - to write a closed -form approximation of the outage probability $F$.

- APPENDIX C - Includes some Bibliographic references.

- APPENDIX D - Includes the used acronyms.

SYSTEM MODEL

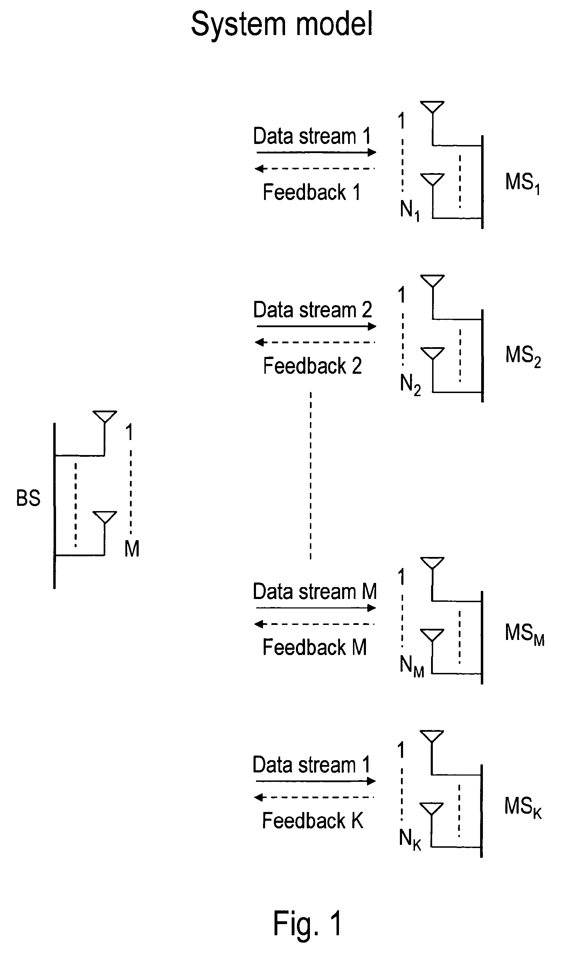

With reference to fig.1, we consider the downlink (DL) of a heterogeneous MIMO / MISO cellular network where the Base Station (BS) employs M transmit antennas and each of the K mobile stations (MS) employs $N_k$ antennas. Every user is expected to receive (on a long term average) a fraction $\overline{R}_k$ of the sum rate $R_{SUM}$, so that the average rate of user k in bit/s/Hz is:

$$R_k = \overline{R}_k R_{SUM} \quad \forall k \in [1, K]$$

Eq.1

The narrowband $N_k \times M$ channel $\mathbf{H}_k$ between the BS and the k-th MS is modelled as a Rayleigh i.i.d. matrix variable where each entry is $[\mathbf{H}_k]_{i,j} \sim CN(0, \rho_k)$. The average channel power $\rho_k$ is related to path loss and shadowing and it can be considered as slowly varying. The BS transmits M equal power independent data streams on M orthogonal beamforming vectors $\mathbf{S} = [\mathbf{s_1} \ ... \ \mathbf{s_M}]$, with total transmit power M. The beamforming vectors are generated randomly, still preserving the orthogonality condition $\mathbf{S^H S} = \mathbf{I}$. A new random set of beamforming vectors is generated regularly by the BS (say on every time slot). Given the beamforming vectors set $\mathbf{S}$, the signal received on the $N_k$ antennas of the k-th MS is:

$$\mathbf{y_k} = \sum_{m=1}^{M} \mathbf{H_k s_m} d_m + \mathbf{w_k} = \sum_{m=1}^{M} \mathbf{q_{k,m}} d_m + \mathbf{w_k} \ ,$$

Eq. A

where $d_m \sim CN(0,1)$ are the incorrelated unit-power symbols transmitted on beam m taken from a Gaussian codebook, $\mathbf{w}_k \sim CN(\mathbf{0_{N_k \times 1}}, \mathbf{I_{N_k \times N_k}})$ (Eq.B) is the ambient noise received by the k-th MS, and $\mathbf{q_{k,m}} = \mathbf{H_k s_m}$ (Eq.C) is the equivalent channel perceived by the k-th MS when the BS transmits on beam m. When the BS schedules user k* on a single beam $\mathbf{s}_{m^*}$ the received SINR $\gamma_{k^*,m^*}$ is:

$$\gamma_{k*,m*} = \frac{\left|\mathbf{b}_{k*,m*}^{\mathrm{H}}\mathbf{H}_{k*}\mathbf{s}_{m*}\right|^2}{1/\rho_k + \sum_{j=1, j\neq m*}^{M}\left|\mathbf{b}_{k*,m*}^{\mathrm{H}}\mathbf{H}_{k*}\mathbf{s}_j\right|^2} = \frac{\left|\mathbf{b}_{k*,m*}^{\mathrm{H}}\mathbf{q}_{k*,m*}\right|^2}{1/\rho_k + \sum_{j=1, j\neq m*}^{M}\left|\mathbf{b}_{k*,m}^{\mathrm{H}}\mathbf{q}_{k*,j}\right|^2} \qquad \text{Eq.2}$$

where $\mathbf{b}_{k*,m}$ is the normalized receiver beamforming vector on beam $\mathbf{s}_{m*}$, such that $\sum_{m=1}^{M}\left|\mathbf{b}_{k*,m}\right|^2 = 1$. Symbol * might be omitted for brevity in the following.

We assume that the BS is aware of the average channel power set $\{\rho_k\}$, but does not have any knowledge about the instantaneous user channel realizations $\{\mathbf{H}_k\}$. On the other side, we assume that each MS knows the number K of active users in the cell and has perfect knowledge of all the equivalent channel vectors $\{\mathbf{q}_{k,m} = \mathbf{H}_k\mathbf{s}_m\}$, obtained i.e. during DL preamble equalization. The proposed algorithm works as described in the SUMMARY OF THE INVENTION.

EP ALGORITHM

The objective of the EP (Equal Probability) algorithm is to let each user evaluate the SINR threshold $\alpha_k$ in a distributed way in order to maximize sum-rate and satisfy fairness constraints. The event of a MS giving a positive feedback on a certain beam is independent from the event that another MS gives a feedback on the same beam because of channel incorrelation. We assume that the BS schedules for transmission on a certain beam one random user among those that give a positive feedback on that beam (RS), employing a conservative rate equal to log(1+$\alpha_k$). The sum-rate is:

$$R_{SUM} = \sum_{k=1}^{K} R_k = \sum_{k=1}^{K}\sum_{m=1}^{M} P^S(k,m)\log\left(1+\alpha_k^{\ m}\right) =$$
$$= \sum_{k=1}^{K}\left\{\sum_{m=1}^{M}\left(\sum_{j=1}^{K} P_m(j|k)\frac{1}{j}\right)p\left(\gamma_{k,m} \geq \alpha_k^{\ m}\right)\log\left(1+\alpha_k^{\ m}\right)\right\} \qquad \text{Eq.3}$$

where $P^S(k,m)$ is the probability of scheduling user $k$ on beam m, $P_m(j|k)$ is the probability that exactly j users exceed their threshold on beam m conditioned to the event that user $k$ exceeds its threshold on beam m, and $p(\gamma_{k,m} \geq \alpha_k^m)$ is the probability that the SINR of user $k$ on beam m exceeds the threshold $\alpha_k^m$. The considered system model implies that $p(\gamma_{k,m} \geq \alpha_k) = P(\gamma_{k,j} \geq \alpha_k)$ $\forall m,j$ for a wide range of receivers (e.g. antenna selection, maximum ratio combining and non-adaptive beamforming receivers). We can therefore omit the beam index $m$ from $\gamma_{k,m}$ and $\alpha_k^m$, and decouple the sum-rate formulation with regards to the beam indexes $m$:

$$R_{SUM} = \sum_{k=1}^{K} M\left(\sum_{j=1}^{K} P(j|k)\frac{1}{j}\right)p\left(\gamma_k \geq \alpha_k\right)\log\left(1+\alpha_k\right) \quad .$$

Eq.4

The Eq.4 is still difficult to be analytically treated, because $P(j|k)$ does not have a straightforward expression. We can simplify Eq.4 by decoupling the optimization by forcing an equal feedback probability $p(\gamma_k \geq \alpha_k) = \overline{F}$ to all the MSs. User channels independence implies that if a random scheduler (RS) is used each user is scheduled on a given beam with the same probability:

$$P^S(k,m) = P^S = \frac{1 - P_{out}}{K} \quad ,$$

Eq.5

where:

$$P_{out} = (1 - \overline{F})^K$$

Eq.6

is the *scheduling outage* probability [9], i.e. the probability that no user exceeds its threshold on a given beam. The Eq. 3 can now be written as:

$$R_{SUM} = \sum_{k=1}^{K} M P^S \log(1 + \alpha_k) = \sum_{k=1}^{K} M \frac{1 - P_{out}}{K} \log(1 + \alpha_k) .$$

Eq.7

The sum rate maximization problem is thus reduced to finding the optimal value of $P_{out}$. We assume that every user knows its SINR CDF $p(\gamma_k < \beta)$ and its complementary CDF $p(\gamma_k \geq \beta) \equiv 1 - p(\gamma_k < \beta)$. Given a target value of $P_{out}$, every user can evaluate the threshold $\alpha_k = \underset{\alpha_k > 0}{\arg} \{ p(\gamma_k \geq \alpha_k) = \overline{F} \}$ without any knowledge of other users' thresholds. We call this algorithm EP (Equal probability). With EP each user can locally evaluate its SINR threshold without CQI of the other users, given a target value of $P_{out}$.

Subsection A - THRESHOLD CALCULATION FOR MIMO NETWORKS

In this subsection we show how to calculate the set of thresholds $\{\alpha_k\}$ when heterogeneous MSs are active in the same cell (e.g. both single antenna and multiple antennas MSs). For simplicity reasons we consider multiple antenna receivers where each receiving antenna is processed independently and there is no adaptive beamforming at the receiver side. The considered Rayleigh channel model implies that each receiving antenna is subject to independent fading. We define $\gamma_k^n$ as the SINR experienced on the n-th receiving antenna of the k-th user on a given transmit beam, and $\widetilde{\gamma}_k = \underset{n}{\max} \{ \gamma_k^n \}$. The complementary CDF of $\gamma_k^n$ is [5]:

$$p(\gamma_k \geq \beta) \equiv 1 - p(\gamma_k < \beta) = \frac{e^{-\frac{\beta}{\rho_k}}}{(1 + \beta)^{M-1}} \quad .$$

Eq.8

The statistical independence of $\gamma_k^n$ with regards to n implies that:

$$p(\widetilde{\gamma}_k < \alpha_k) = p(\gamma_k^n < \alpha_k)^{N_k} .$$

Eq.9

The EP algorithm forces every user to give feedbacks with probability $\overline{F}$. The equation that gives the threshold

$\alpha_k$, to be solved by every MS, is

$$P_{out} = F^K = p\left(\gamma_k^n < \alpha_k\right)^{KN_k} \rightarrow p\left(\gamma_k^n < \alpha_k\right) = \left(P_{out}\right)^{\frac{1}{KN_k}} \quad . \qquad \text{Eq.10}$$

Every user can compute its threshold by solving Eq.10 with regards to $\alpha_k$ as:

$$p\left(\gamma_k^n \geq \alpha_k\right) = \frac{e^{-\frac{\alpha_k}{\rho_k}}}{\left(1+\alpha_k\right)^{M-1}} = 1 - \left(P_{out}\right)^{\frac{1}{KN_k}} \quad ,$$

Eq.11

the first member of Eq.11 is monotone in $\alpha_k$, so the single solution of Eq.11 can be easily computed. Eq.11 holds also for single-antenna MSs, since these users simply set $N_k = 1$.

EVALUATION OF THE OUTAGE PROBABILITY.

In the former section we showed that every user can locally evaluate its threshold $\alpha_k$ according to a certain scheduling outage probability $P_{out}$, so that all the users have the same feedback probability $\overline{F}$ regardless of their average channel power $\rho_k$ or their number of receiving antennas $N_k$. The problem is now reduced to finding the scheduling outage probability $P_{out}$ which maximizes the sum-rate. The main focus here is to have $P_{out}$ as a function of $K$ and $M$ only, to allow a fully distributed algorithm where both $P_{out}$ and $\alpha_k$ are evaluated locally by every MS. We will first find a simple condition on $P_{out}$ that enables an optimal scaling law of the sum-rate when $K \rightarrow \infty$ (Subsection A), and then we will evaluate the scheduling outage probability $P_{out}(K,M)$ that maximizes the sum-rate when K is large, but finite (Subsection B).

Subsection A. SCALING LAW OF THE SUM RATE.

Dirty Paper Coding (DPC) is known to achieve the optimal sum rate in a Gaussian broadcast channel [1]. For a high number of users with N receive antennas and random scheduling, the sum- rate of DPC scales as $M \log \log(NK)$ [3]. We suppose to have $K$ users, $M > 1$ beams and $N \geq 1$ antennas per user.

*Property 1*: The average sum-rate $R_{SUM}$ of the EP algorithm in conjunction with a random scheduler (RS) satisfies:

$$\lim_{K\rightarrow\infty} \frac{R_{SUM}}{M \log\log(NK)} = 1 \qquad \text{if} \qquad \begin{cases} P_{out} = \dfrac{1}{K^\varphi} \\ \varphi > 0 \end{cases}$$

Eq.12

and is therefore asymptotically optimal.

*Proof*: The threshold of user k given by the EP algorithm is the solution of Eq.11, which cannot be expressed in closed form. We lower-bound $p(\gamma_k \geq \alpha_k)$ with the function $c_k(\alpha_k)$ (see appendix A for details):

$$p\left(\gamma_k \geq \alpha_k\right) \geq c_k\left(\alpha_k\right) = e^{\left(-M-\frac{1}{\rho_k}+1\right)\alpha_k}$$

Eq.13

It is easy to see that if $\overline{F} = 1 - P_{out}^{\frac{1}{KN}} = p\left(\gamma_k \geq \alpha_k\right) = c_k\left(\tilde{\alpha}_k\right) \to \tilde{\alpha}_k < \alpha_k$. We can solve $c(\tilde{\alpha}_k) = \overline{F}$ and write the lower-bound $\tilde{\alpha}_k$ in closed-form:

$$\tilde{\alpha}_k\left(P_{out}\right) = -\frac{\log\left(1 - P_{out}^{\frac{1}{KN}}\right)}{M + \frac{1}{\rho_k} - 1} < \alpha_k\left(P_{out}\right)$$

Eq.14

If we put Eq.14 into Eq.7 we obtain a lower-bound of the sum-rate:

$$R_{SUM} = \sum_{k=1}^{K} M \frac{1 - P_{out}}{K} \log\left(1 + \alpha_k\right) \geq R_{SUM}^{L} = \sum_{k=1}^{K} M \frac{1 - P_{out}}{K} \log\left(1 + \tilde{\alpha}_k\left(P_{out}\right)\right)$$

Eq.15

$$= \sum_{k=1}^{K} M \frac{1 - P_{out}}{K} \log\left(1 - \frac{\log\left(1 - P_{out}^{\frac{1}{KN}}\right)}{M + \frac{1}{\rho_k} - 1}\right)$$

Let $P_{out} = \frac{1}{K^{\varphi}}$ where $\varphi > 0$ is a non infinitesimal real number. It can be shown that (see APPENDIX B)

$$P_{out}^{\frac{1}{KN}} = \left(\frac{1}{K}\right)^{\frac{\varphi}{KN}} \underset{K \to \infty}{\approx} 1 - \frac{\varphi}{N} \frac{\log(K)}{K} \qquad\qquad Eq.16$$

and

$$\lim_{K \to \infty} P_{out} = \lim_{K \to \infty} \frac{1}{K^{\varphi}} = 0 \qquad\qquad Eq.17$$

The asymptotic ratio between the sum-rate lower-bound and the scaling law of DPC sum-capacity with full channel information at the transmitter is:

$$\lim_{K \to \infty} \frac{R_k^L}{M \log \log (KN)}$$

Eq.18

$$= \lim_{K \to \infty} \frac{\sum_{k=1}^{K} M \frac{1-P_{out}}{K} \log \left( 1 - \frac{\log \left( 1 - P_{out}^{\frac{1}{KN}} \right)}{M + \frac{1}{\rho_k} - 1} \right)}{M \log \log (KN)}$$

$$= \lim_{K \to \infty} \frac{\frac{M}{K} \sum_{k=1}^{K} \log \left[ 1 - \log \left( \frac{\varphi}{N} \frac{\log(K)}{K} \right) \frac{1}{M + \frac{1}{\rho_k} - 1} \right]}{M \log \log (KN)}$$

$$= \lim_{K \to \infty} \frac{\frac{M}{K} \sum_{k=1}^{K} \log \left[ 1 + \left( \log N - \log \varphi + \log K - \log \log K \right) \frac{1}{M + \frac{1}{\rho_k} - 1} \right]}{\log \log (KN)}$$

$$= \lim_{K \to \infty} \frac{\frac{M}{K} \sum_{k=1}^{K} \log \log (KN) - \log \left( M + \frac{1}{\rho_k} - 1 \right)}{M \log \log (KN)}$$

$$= \lim_{K \to \infty} \frac{\frac{M}{K} \sum_{k=1}^{K} \log \log (KN)}{M \log \log (KN)} = 1$$

It is therefore shown that letting $P_{out}(K) = \dfrac{1}{K^\varphi}$ , with $\varphi > 0$ any real number, is a *sufficient* condition to enable the asymptotical scaling law of DPC.

B. OPTIMAL OUTAGE PROBABILITY.

When K is large but finite, EP does not reach the optimal sum-rate of DPC. Anyway, from a practical standpoint, we are still interested in finding the value of $P_{out}(K,M)$ which maximizes the sum-rate lower-bound given by Eq.15.

Without loss of generality, for analytical convenience, we can still let $P_{out} = \dfrac{1}{K^\varphi}$ and rely on the approximation given by Eq.16. Joining Eq.15, Eq.14 and Eq.16, and the following similar steps to Eq.18 we obtain:

$$R_{SUM}^{L} = \sum_{k=1}^{K} M \frac{1-P_{out}}{K} \log\left(1+\tilde{\alpha}_k\left(P_{out}\right)\right) \qquad\qquad\text{Eq.19}$$

$$\underset{K\to\infty}{\approx} \sum_{k=1}^{K} M \frac{1-P_{out}}{K} \log\left[1+\left(\log N - \log\varphi + \log K - \log\log K\right)\frac{1}{M+\dfrac{1}{\rho_k}-1}\right]$$

$$\underset{K\to\infty}{\approx} \sum_{k=1}^{K} M \frac{1-P_{out}}{K} \left[\log\log\left(\frac{K}{\varphi}\right) - \log\left(M+\frac{1}{\rho_k}-1\right)\right]$$

$$\underset{K\to\infty}{\approx} \sum_{k=1}^{K} M \frac{1-P_{out}}{K} \log\log\left(\frac{K}{\varphi}\right) = M\left(1-P_{out}\right)\log\log\left(-\frac{K}{\log_K\left(P_{out}\right)}\right)$$

$$= M\left(1-P_{out}\right)\log\log\left(-\frac{K\log K}{\log\left(P_{out}\right)}\right) = M\left(1-P_{out}\right)\log\left[\log\left(-\frac{K}{\log\left(P_{out}\right)}\right)+\log\log K\right]$$

$$\underset{K\to\infty}{\approx} M\left(1-P_{out}\right)\log\log\left(-\frac{K}{\log\left(P_{out}\right)}\right)$$

Every user can numerically maximize Eq.19 and find an estimate of the optimal outage probability $P_{out}$.

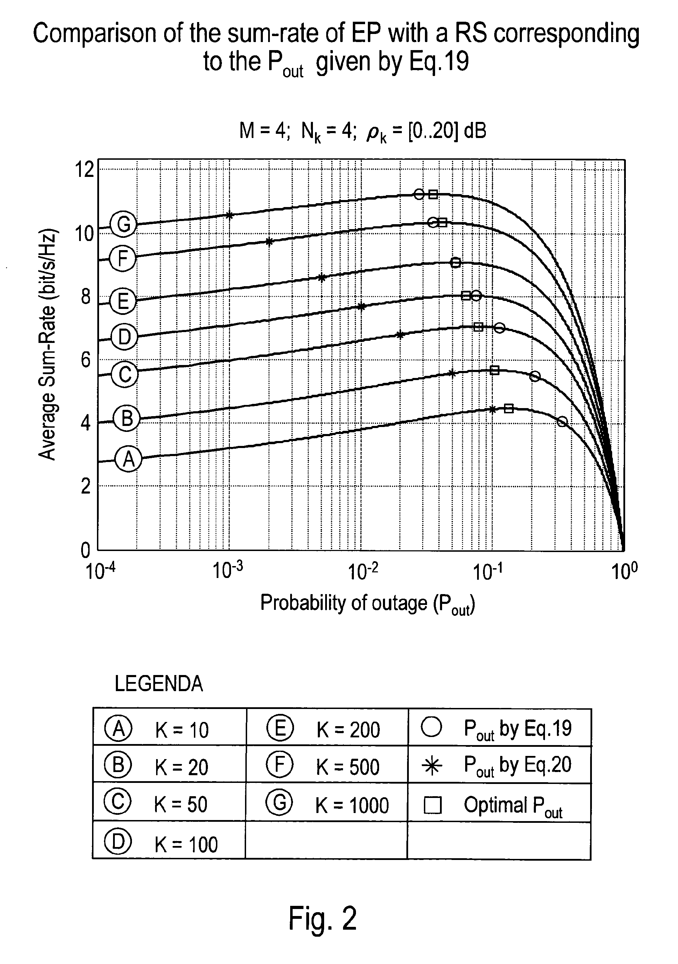

**Fig.2** shows the average sum-rate in Eq.19 as a function of $P_{out}$ for different values of K when the EP algorithm is employed with a random scheduler (RS), $M = N_k = 4$ and $\{\rho_k\} \sim U[0;20](dB)$. The optimal sum-rate is evaluated as

$$\max_{P_{out}}\left\{\sum_{k=1}^{K} R_k\left(P_{out}\right)\right\}$$   and is displayed with the "□" marker. Eq.19 is shown to give a good estimate of the optimal

$P_{out}$ even when the number of users is moderate. When $K \geq 50$ the sum-rate penalty provided by the use of Eq.19 with regards to the optimal sum-rate is negligible. We also compare the optimal sum-rate with the sum-rate obtained using the closed-form asymptotically optimal value:

$$P_{out} = \frac{1}{K} \qquad\qquad\text{Eq.20}$$

The rate loss of Eq.20 with regards to the optimal sum-rate grows with K, but it is still lower than 0.7*b/s/Hz* when K=1000. When K=100 the rate loss of Eq.20 is equal to 0.36b/s/Hz (4.5% of the optimal sum-rate).

FAIRNESS CONSTRAINTS

According to the EP algorithm, every user has the same probability of giving a feedback on a certain beam. If a random scheduler (RS) is used together with EP, the user selected for transmission is chosen randomly among those that reported a positive feedback, while the beam remains unscheduled if no user exceeds its SINR threshold on that beam. We recall from section 3 that the probability of scheduling of user k is $P^S = \dfrac{1-P_{out}}{K}$ when a random scheduler is used in conjunction with EP (cfr. Eq.5). Under the assumptions for the EP algorithm the average throughput experienced by every user is

$$R_k = \sum_{m=1}^{M} P^S(k,m)\log(1+\alpha_k) = M\frac{1-P_{out}}{K}\log(1+\alpha_k) \qquad \text{Eq.21}$$

which is an unfair split of rate that privileges users with higher thresholds $\{\alpha_k\}$ (i.e. users with higher $N_k$ or $\rho_k$). We instead want to split the sum rate according to the proportional rate constraints $\overline{R}_k$, as stated in Eq.1. Joining Eq.21 and Eq.1 we obtain a set of K constraints on $P^S(k)$

$$P^S(k) = \frac{\overline{R}_k}{\log(1+\alpha_k)} R_{SUM} \qquad \forall k \ .$$

Eq.22

The EP criterion provides other K+1 constraints on $\{P^S(k)\}$:

$$\begin{cases} \sum_{k=1}^{K} P^S(k) = 1 - P_{out} \\ P^S(k) \le \overline{F} \quad \forall k \end{cases}$$

Eq.23

The scheduler objective is to find the set $\{P^S(k)\}$ that maximizes the sum-rate still satisfying the constraints of Eq.22 and Eq.23:

$$\{P^S(k)\} = \underset{\{P^S(k)\}}{\arg\max} \left\{ R_{SUM} = M\sum_{k=1}^{K} P^S(k)\log(1+\alpha_k) \right\} \qquad \text{Eq.24}$$

$$s.t. \begin{cases} P^S(k) = \dfrac{\overline{R}_k}{\log(1+\alpha_k)} R_{SUM} \quad \forall k \\ \sum_{k=1}^{K} P^S(k) = 1 - P_{out} \\ P^S(k) \le \overline{F} \quad \forall k \end{cases}$$

Eq.24 is a non-linear maximization with non-linear constraints that requires an iterative numerical solution.

SCHEDULING ALGORITHM

Herein a suboptimal scheduler which evaluates the scheduling probabilities $\{P^S(k)\}$ in closed-form is presented. The difficulty of the numerical solution of Eq.24 is due to the non linear constraint $P^S(k) \le \overline{F}$. Anyway, if channel powers $\{\rho_k\}$ and rate coefficients $\{\overline{R}_k\}$ are not excessively unbalanced, constraint $P^S(k) \le \overline{F}$ is implicitly satisfied, as the optimal scheduler tends to allocate homogeneous values of $P^S(k)$ to all the users and $\overline{F} > (1 - P_{out})/K$ for the values of K of practical interest. Constraint $P^S(k) \le \overline{F}$ can thus be omitted from Eq.24 if a simplified scenario where $\{\rho_k\}$ and $\{\overline{R}_k\}$ are moderately unbalanced is assumed, and a closed-form linear solution of Eq.24 with regards to $\{P^S(k)\}$ is obtained after some simple algebraic passages:

$$\hat{P}^S(k) = \frac{\overline{R}_k}{\log(1+\alpha_k)}\hat{R}_{SUM} = \frac{\overline{R}_k}{\log(1+\alpha_k)}\frac{1-P_{out}}{\sum_{k=1}^{K}\frac{1}{\log(1+\alpha_k)}} ,$$

Eq.25

where $\hat{P}^S(k)$ is the optimal scheduling probability of user k, and $\hat{R}_{SUM} = \dfrac{1-P_{out}}{\sum_{k=1}^{K}\dfrac{1}{\log(1+\alpha_k)}}$ is the optimal sum-rate.

Let $\tilde{P}_k{}^S$ be the actual scheduling probability of user k averaged over an equivalent time window of $N_W$ time slots with an exponential weight function:

$$\tilde{P}_k{}^S = \frac{1}{N_W}\sum_{t=0}^{T}e^{\frac{t-T}{N_W}}s_k(t),$$

Eq.26

where T is the time-index of the present time slot and $s_k(t)$ is a variable equal to 1 if user k is scheduled in time slot t, and equal to 0 if user k is not scheduled in time slot t. The scheduling probability can be iteratively updated:

$$\tilde{P}_k{}^S(t) = \left(1-\frac{1}{N_W}\right)\tilde{P}_k{}^S(t-1) + \frac{1}{N_W}s_k(t).$$

Eq.27

The objective of the PRS is to schedule users in time slot T according to:

$$k_m^*(T) = \underset{k_m^*(T)\in S_m(T)}{\arg\min}\left\{\sum_{k=1}^{K}\left|\tilde{P}_k{}^S(T)-\hat{P}_k{}^S\right|\right\},$$

Eq.28

where $k_m^*(T)$ is the user scheduled on beam m at time slot T and $S_m(T)$ is the set of users that give feedback on beam m at time slot T.
The PRS algorithm works as follows:

1. Evaluate the set of target scheduling probabilities $\left\{\hat{P}_k{}^S\right\}$ according to Eq.25.

2. Schedule on each beam the user $k_m^*(T) = \underset{k_m^*(T)\in S_m(T)}{\arg\min}\left\{\sum_{k=1}^{K}\left|\tilde{P}_k{}^S(T)-\hat{P}_k{}^S\right|\right\}$.

3. Update the effective scheduling probabilities $\tilde{P}_k{}^S(T)$ according to Eq.27.

4. Repeat from step 2. on next time slot. If a significant change in $\{\rho_k\}$ occurred within last time slot, repeat from step 1.

Under an algorithmic point of view, PRS is similar to the PFS proposed in [4]. By the way PRS is optimized to work in coordination with EP and enables fairness in terms of rate splitting among the active users while PFS, as it is proposed in [4], enables only scheduling probability constraints.

NUMERICAL RESULTS

In this section we compare the performance of the proposed algorithms with other significant schemes taken from recent literature by numerical simulations. We consider a DL cellular system with an M-antennas BS and K active users with $N_k$ antennas each, where the number of receiving antennas is an i.i.d. integer variable $N_k \sim U[1;4]$. Every user is assigned an equal share of the sum rate $\overline{R}_k = \dfrac{1}{K}$ to be accomplished by the scheduling algorithm. In our first simulations all the users have equal power Rayleigh channels with gain $\rho_k = 10dB$.

|  | EP | Single Antenna [i] | OB [ii] | O-SDMA [iii] |
|---|---|---|---|---|
| Feedback per frame per active user: | $\log_2(M+1)bits$ | 1 real number | 1 real number | $\log_2(M+1)bits$+1 real number |

Performances are evaluated in terms of average sum-rate $R_{SUM}$ and average normalized rate deviation (NRD), which is measured as:

$$NRD_k = \frac{\left| \overline{R}_k - \dfrac{R_k}{\sum\limits_{j=1}^{K} R_j} \right|}{\overline{R}_k} \qquad\qquad \text{Eq.29}$$

The performance of the proposed EP algorithm is evaluated in conjunction with a random scheduler (RS) and with the PRS described in Section 6, with a time window $N_w$ equal to the number of simulated time slots. We also consider the following schemes from current literature:

 i. Single antenna opportunistic transmission.
 ii. Opportunistic beamforming with full CQI [4].
 iii. Opportunistic-SDMA with full CQI [5].

Details about the implemented schemes can be found in **Appendix C**.

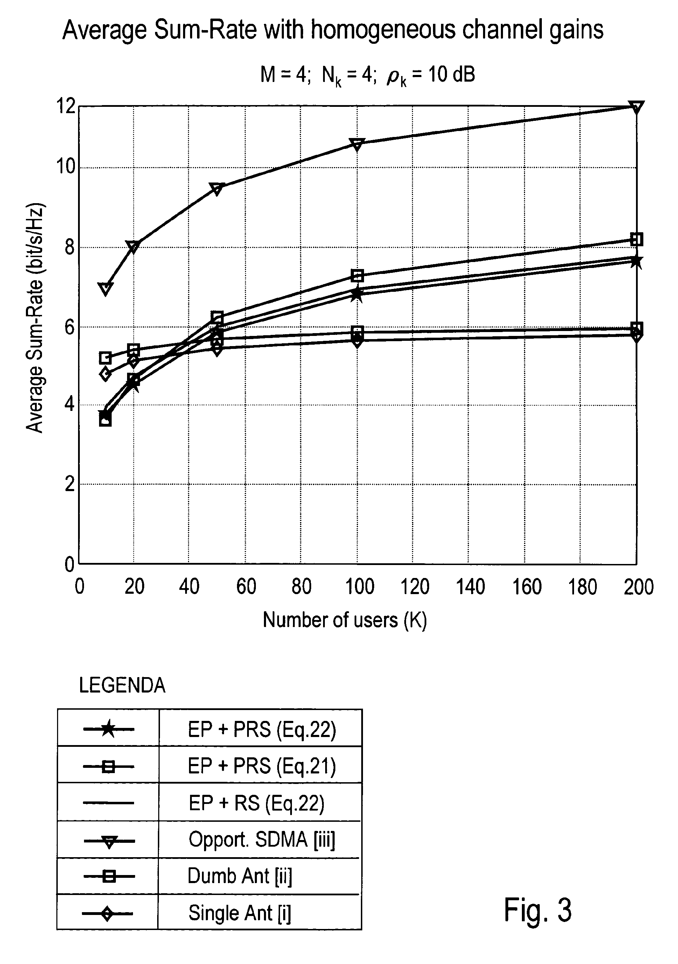

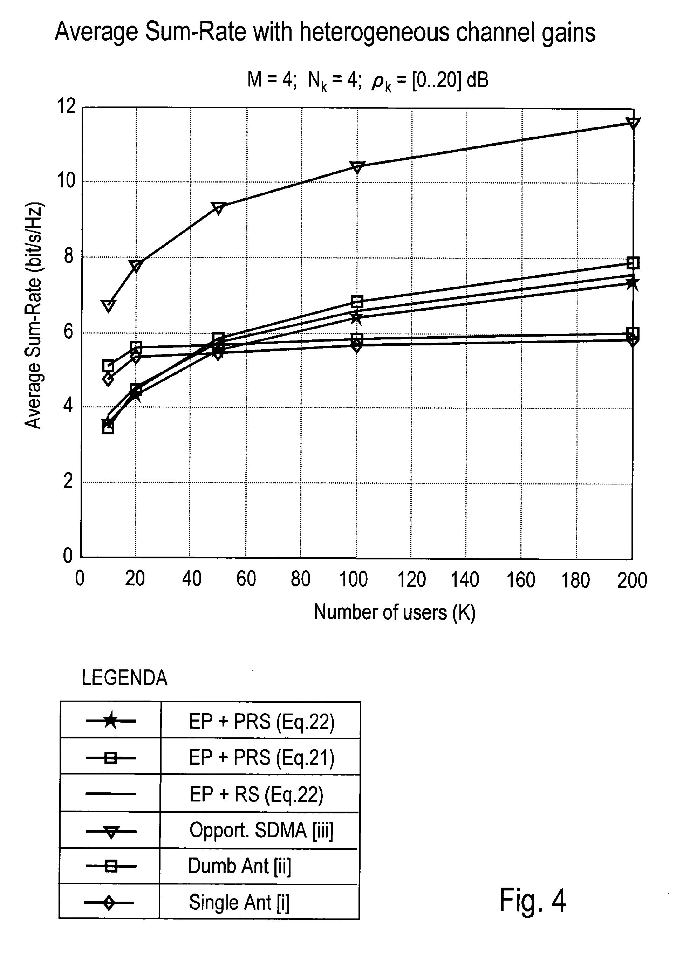

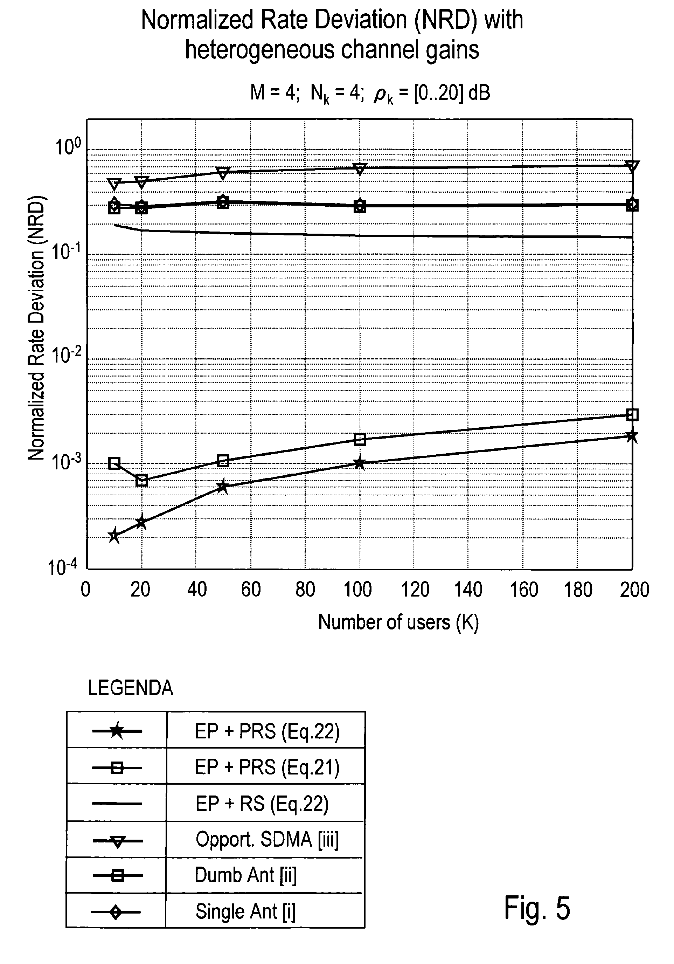

**Fig.3** shows the sum-rate performance of the aforementioned algorithms versus the number of active users K. Even if the scaling law of EP is similar to that of [iii], the reduced feedback causes an almost constant performance gap of about 3*b/s/Hz* with regards to [iii]. As the number of users in the cell grows, EP outperforms [i]. and [ii]. In **Fig.4** we take into account a more realistic model, where the channel power $\rho_k$ of every user is uniformly distributed (in dB) between 0dB and 20dB. **Fig.4** shows Average Sum-Rate with heterogeneous channel gains. **Fig.5** shows Normalized Rate Deviation (NRD) with heterogeneous channel gains.
The Rate gap paid by EP with regards to [iii] is slightly greater than in **Fig.3**, even if the scaling laws of the sum-rate are still the same. **Fig.5** shows the Normalized Rate Deviation (NRD) as it was defined in Eq.29 for all the considered schemes, in the same scenario used to generate **Fig.4**. EP with the PRS algorithm is the only scheme that guarantees rate fairness in this scenario among the ones considered in this description. The rate gap paid by EP with regards to [iii] is thus partly due to the fairness constraints accomplished by the EP algorithm. The analysis of **Fig.3** and **Fig.4** confirms the small sum-rate penalty given by the use of Eq.20 instead of the near-optimal $P_{out}$ provided by Eq.19.

CONCLUSIONS

A novel practical algorithm beyond the teaching of the DL SDMA scheduling algorithm considered in [7]-[8] for heterogeneous MIMO systems has been proposed in the present invention. A very low signalling overhead of $\log_2(M+1)$ bits per user per scheduling slot is needed to allow asymptotically optimal sum-rate, since the parameters required to run the algorithm are locally available to every MS. A simplified version of the algorithm (Eq.20) is shown to achieve the nearly-optimal sum-rate. Fairness requirements are accomplished by the use of the PRS in conjunction with the EP algorithm.

Although the invention has been described with particular reference to a preferred embodiment, it will be evident to those skilled in the art, that the present invention is not limited thereto, but further variations and modifications may be applied without departing from the scope of the claims.

## APPENDIX A

The optimal thresholds $\alpha_k$ given by the EP algorithm are the solutions of:

$$\overline{F} = p(\gamma_k \geq \alpha_k) = \frac{e^{-\frac{\alpha_k}{\rho_k}}}{(1+\alpha_k)^{M-1}} . \qquad \text{Eq.30}$$

We need to find an invertible expression $c_k(\alpha_k)$ which is a lower-bound of $p(\gamma_k \geq \alpha_k)$. It can be shown that:

$$p(\gamma_k \geq \alpha_k) = e^{-\frac{\alpha_k}{\rho_k}}(1+\alpha_k)^{1-M} \geq e^{q_k \alpha_k} = c_k(\alpha_k), \qquad \text{Eq.31}$$

where $q_k = \lim_{\alpha_k \to 0} \frac{\partial p(\gamma_k \geq \alpha_k)}{\partial \alpha_k}$. We can now write:

$$\lim_{\alpha_k \to 0} \frac{\partial p(\gamma_k \geq \alpha_k)}{\partial \alpha_k} = \lim_{\alpha_k \to 0} \left( \frac{e^{-\frac{\alpha_k}{\rho_k}}}{(1+\alpha_k)^M}(1-M) - \frac{(1+\alpha_k)^{1-M}}{\rho_k} e^{-\frac{\alpha_k}{\rho_k}} \right) = -M - \frac{1}{\rho_k} + 1 . \qquad \text{Eq.32}$$

We can finally write the lower-bound of Eq.30 as:

$$c_k(\alpha_k) = e^{\left(-M - \frac{1}{\rho_k} + 1\right)\alpha_k} \qquad \text{Eq.33}$$

and write the closed-form lower-bound approximation of $\alpha_k$:

$$\tilde{\alpha}_k(P_{out}) = -\frac{\log\left(1 - (P_{out})^{\frac{1}{KN}}\right)}{M + \frac{1}{\rho_k} - 1} < \alpha_k(P_{out}) \quad . \qquad \text{Eq.34}$$

## APPENDIX B

We need to write an analytically convenient approximation of F, to be put into Eq.15, that has to be asymptotically tight for large K values:

$$F = P_{out}^{\frac{1}{KN}} = \left(\frac{1}{K}\right)^{\frac{\varphi}{KN}} \underset{x=\frac{1}{K}}{=} x^{\frac{\varphi}{N}x} = \lim_{x \to 0} x^{\frac{\varphi}{N}x} + x \frac{\partial}{\partial x} x^{\frac{\varphi}{N}x} + o(x)$$

Eq.35

Eq.35 is asymptotically tight, since $x \to 0$ when K is high. After some algebra it can be shown that:

$$\begin{cases} \lim_{x \to 0} x^{\frac{\varphi}{N}x} = 1 \\ \dfrac{\partial}{\partial x} x^{\frac{\varphi}{N}x} = \dfrac{\varphi}{N} x^{\frac{\varphi}{N}x}(1 + \log x) \end{cases}$$

Eq.36

Therefore Eq.35 can be written as:

$$F = \left(\frac{1}{K}\right)^{\frac{\varphi}{KN}} \underset{K \to \infty}{=} \lim_{x \to 0} x^{\frac{\varphi}{N}x} + x \frac{\partial}{\partial x} x^{\frac{\varphi}{N}x}$$

$$= 1 + \frac{\varphi}{N} x^{\frac{\varphi}{N}x+1} \log x \underset{x \to 0}{\approx} 1 + \frac{\varphi}{N} x \log x = 1 - \frac{\varphi}{N} \frac{\log K}{K}$$

Eq.37

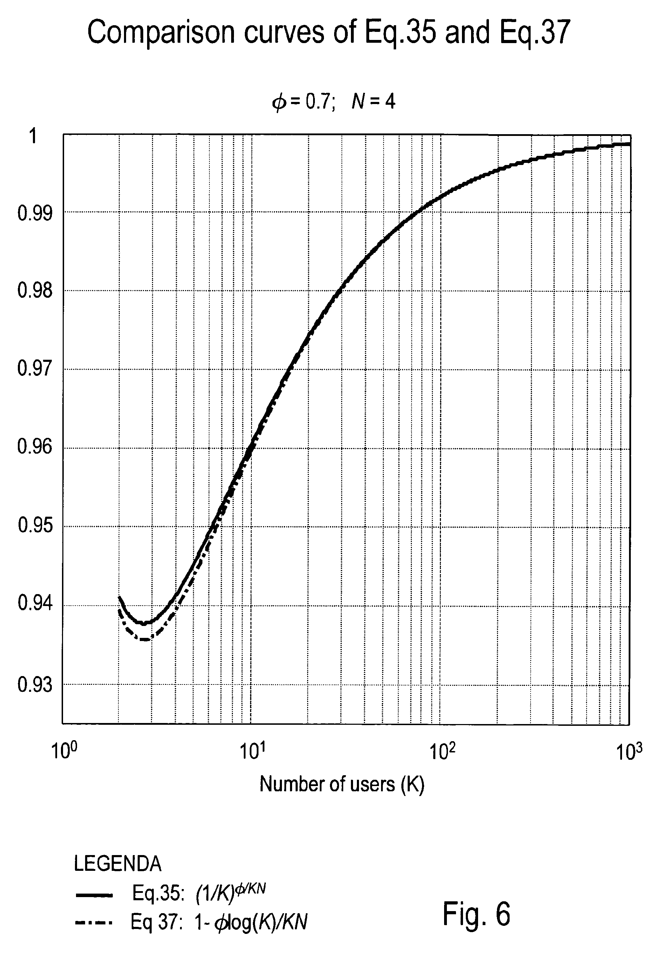

which is the closed form approximation we were looking for. **Fig.6** shows comparison curves of Eq.35 and Eq.37.

## APPENDIX C (BIBLIOGRAPHY)

[1] G. Caire, S. Shamai (Shitz). "On the Achievable Throughput of a Multiantenna Gaussian Broadcast Channel", IEEE Trans. Inform. Theory, vol. 49, pp. 1691-- 1706, July 2003

[2] M. Costa, "Writing on Dirty Paper", IEEE Trans. Inform. Theory, vol. IT-29, pp. 439-441, May 1983

[3] M. Sharif and B. Hassibi, "Scaling laws of sum rate using time-sharing, DPC, and beamforming for MIMO broadcast channels", Information Theory, 2004. ISIT 2004. Proceedings International Symposium on, 27 June-2 July 2004 Page(s):175P

[4] Viswanath, D. N. Tse, and R. Laroia, "Opportunistic beamforming using dumb antennas," IEEE Trans. Inform., vol. 48, no. 6, pp. 1277–1294, June 2002

[5] M. Sharif and B. Hassibi, "On the capacity of MIMO broadcast channels with partial side information", Information Theory, IEEE Transactions on, Volume 51, Issue 2, Feb. 2005 Page(s):506 – 522

[6] Q. H. Spencer, A. Lee Swindlehurst and M. Haardt, "Zero-forcing methods for downlink spatial multiplexing in multiuser MIMO channels", IEEE Trans. Signal Processing, vol. 52, no. 2 , pp. 461-471, Feb. 2004

[7] J. Diaz, O. Somekh, O. Simeone, Y. Bar-Ness, "Scaling law of the sum-rate for multi-antenna broadcast channels with deterministic or selective binary feedback", in Proc. ITW'06

[8] J. Diaz, O. Simeone, Y. Bar-Ness, "Sum-rate of MIMO broadcast channels with one bit feedback", In Proc. ISIT'06

[9] D. Gesbert and M. Alouini, "How Much Feedback is Multi-User Diversity Really Worth?", in Proc. IEEE ICC, 2004.

# APPENDIX D (ACRONYMS)

BS     Base Station
CDF   Cumulative Distribution Function
$CN(0, \rho_k)$     Complex Normal (mean, standard deviation)
CQI    Channel Quality Information
CSI    Channel State Information
DL     Downlink
DPC   Dirty Paper Coding
EP     Equal Probability
NRD   Normalized Rate Deviation
MCS   Modulation and Coding Scheme
MIMO  Multiple Input Multiple Output
MISO  Multiple Input Single Output
MS     Mobile Station
NRD   Normalized Rate Deviation
O-SDMA     Opportunistic-SDMA
PFS   Proportional Fair Scheduler
RS     Random Scheduler
SDMA Space Division Multiple Access
SNR   Signal-to-Noise Ratio
SINR  Signal to Noise plus Interference Ratio
TDD   Time Division Duplexing
UL     Uplink

## Claims

1. In a cellular communication system a method for scheduling downlink transmissions, subdivided in time slots, from $M$ beamforming antennas connected to a base station (BS) towards $K$ mobile stations ($MS_1$,....,$MS_K$) each equipped with an arbitrary number $N_k$ of receiving antennas, including the following steps cyclically executed on every time slot:

   a) generating, by the base station, a random set of orthogonal beamforming signal vectors $\mathbf{S} = [\mathbf{s_1}... \mathbf{s_M}]$;
   b) estimating, by every mobile station its relevant signal to interference plus noise ratio SINR value $\gamma_{k,m}$ on every beam $\mathbf{s_m}$ during a downlink training step;

   c) calculating, by every mobile station, its best beam-index $\hat{m}_k$ as $\hat{m}_k = \arg\max_{m}\{\gamma_{k,m}\}$;

   d) comparing, by every mobile station, its best SINR value $\gamma_{k,\hat{m}k}$ with a threshold $\alpha_k$ ;
   e) signalling to the base station, by each mobile station by which $\gamma_{k,\hat{m}k} \geq \alpha_k$ is valid, the best beam-index $\hat{m}_k$ during a feedback uplink transmission, otherwise signalling a beam-index null;
   f) selecting, by the base station, on each beam $m$ at most one among those mobile stations that report a non-null signalling on that beam;
   g) transmitting, by the base station, to the selected users with a rate limited by the SINR threshold,

   **characterized in that** every mobile station (MS) performs the steps of:

   - assuming for every beam $m$ an equal probability $\overline{F}$ to transmit said feedback signalling and estimating independently to each other an individual SINR threshold using the following equation:

$$\frac{e^{-\frac{\alpha_k}{\rho_k}}}{\left(1+\alpha_k\right)^{M-1}} = 1 - \left(P_{out}\right)^{\frac{1}{KN_k}},$$ being $P_{out}$ a system parameter representing the scheduling outage probability corresponding to the probability that no user exceeds its threshold on a given beam, and $\rho_k$ the average power received by the user $k$.

2.  In a cellular communication system a method for scheduling downlink transmissions, subdivided in time slots, from $M$ beamforming antennas connected to a base station (BS) towards $K$ mobile stations ($MS_1$,....,$MS_K$) each equipped with an arbitrary number $N_k$ of receiving antennas, including the following steps cyclically executed on every time slot:

    h) generating, by the base station, a random set of orthogonal beamforming signal vectors $\mathbf{S = [s_1 ...s_M]}$;
    i) estimating, by every mobile station its relevant signal to interference plus noise ratio SINR value $\gamma_{k,m}$ on every beam $\mathbf{s_m}$ during a downlink training step;

    j) calculating, by every mobile station, its best beam-index $\hat{m}_k$ as $\hat{m}_k = \arg\max_m\{\gamma_{k,m}\}$;

    k) comparing, by every mobile station, its best SINR value $\gamma_{k,\hat{m}k}$ with a threshold $\alpha_k$;
    l) signalling to the base station, by each mobile station by which $\gamma_{k,\hat{m}k} \geq \alpha_k$ is valid, the best beam-index $\hat{m}_k$ during a feedback uplink transmission, otherwise signalling a beam-index null;
    m) selecting, by the base station, on each beam $m$ at most one among those mobile stations that report a non-null signalling on that beam;
    n) transmitting, by the base station, to the selected users with a rate limited by the SINR threshold,

    **characterized in that** the base station (BS) performs the steps of:

    - acquiring knowledge about the average power $\rho_k$ received by the user $k$;
    - assuming for every for every beam $m$ and for every user $k$ an equal probability $\overline{F}$ of transmitting said feedback signalling and estimating a set of SINR threshold $\{\alpha_k\}$ using the following equation:

    $$\frac{e^{-\frac{\alpha_k}{\rho_k}}}{\left(1+\alpha_k\right)^{M-1}} = 1 - \left(P_{out}\right)^{\frac{1}{KN_k}},$$ being $P_{out}$ a system parameter representing the scheduling outage probability corresponding to the probability that no user exceeds its threshold on a given beam;
    - transmitting the set of SINR threshold $\{\alpha_k\}$ to the users downlink.

3.  The method of claim 2, **characterized in that** the value of said average power $\rho_k$ is signalled by the mobile station $k$ to the base station (BS).

4.  The method of claim 2, **characterized in that** the value of said average power $\rho_k$ is estimated by the base station (BS) during uplink transmission from the mobile station $k$ in time division duplexing.

5.  The method of any claim from 1 to 4, **characterized in that** said equal probability $\overline{F}$ is defined as $\overline{F} = 1 - P_{out}^{\frac{1}{K}}$.

6.  The method of claim 1, **characterized in that** the system parameter $P_{out}$ is evaluated by the base station (BS) and broadcasted to all mobile stations (MS) regularly or during a set-up phase.

7.  The method of claim 1, **characterized in that** the system parameter $P_{out}$ is evaluated by the mobile stations (MS).

8.  The method of claim 6 or 7, **characterized in that** the system parameter $P_{out}$ is evaluated as $P_{out} = \beta/K^{\varphi}$ with $\beta, \varphi > 0$.

9.  The method of claim 6 or 7, **characterized in that** the system parameter $P_{out}$ is evaluated as $P_{out} = 1/K$.

10. The method of any claim from 1 to 9, **characterized in that** said individual SINR threshold is updated if a remarkable change in $\{\rho_k\}$ by user $k$ or in the number of active users $K$ is occurred within the last time slot.

11. The method of any claim from 1 to 10, **characterized in that** the transmission rate is adjusted to meet the variability on the set of thresholds $\{\alpha_k\}$ by selecting one among various possible Modulation and Coding Schemes.

12. The method of claim 11, **characterized in that** the transmission rate adopted by the base station (BS) for each scheduled user on each beam is further chosen according to the threshold $\alpha_{k_m^*}$, where $k_m^*$ is the user eventually scheduled on beam $m$.

13. The method of any claim from 1 to 12, **characterized in that** the scheduled user $k$ receives a fraction $\overline{R}_k$ of the sum-rate $R_{SUM}$, corresponding to the overall throughput from the BS in bit/s/Hz, so that its average rate $R_k$ is $R_k = \overline{R}_k R_{SUM} \ \forall k \in [1,K]$.

14. The method of claim 13, **characterized in that** the set of scheduling outage probability $\{P^S(k)\}$ that maximizes the sum-rate $R_{SUM}$ is the solution of the following mathematical equation:

$$\left\{P^S\left(k\right)\right\} = \arg\max_{\left\{P^S(k)\right\}} \left\{R_{SUM} = M\sum_{k=1}^{K} P^S\left(k\right)\log\left(1+\alpha_k\right)\right\}$$

subjected to the following constraints:

$$s.t. \begin{cases} P^S\left(k\right) = \dfrac{\overline{R}_k}{\log\left(1+\alpha_k\right)} R_{SUM} & \forall k \\ \displaystyle\sum_{k=1}^{K} P^S\left(k\right) = 1 - P_{out} \\ P^S\left(k\right) \le \overline{F} & \forall k \end{cases}.$$

15. The method of claim 14, **characterized in that** under the hypothesis that both the channel power set $\{\rho_k\}$ and the rate coefficient set $\{\overline{R}_k\}$ are moderately unbalanced, a closed-form linear solution of said mathematical equation with regards to $\{P^S(k)\}$ is obtained by the following simplified equation:

$$\hat{P}^S\left(k\right) = \frac{\overline{R}_k}{\log\left(1+\alpha_k\right)} \hat{R}_{SUM} = \frac{\overline{R}_k}{\log\left(1+\alpha_k\right)} \frac{1-P_{out}}{\displaystyle\sum_{k=1}^{K} \frac{1}{\log\left(1+\alpha_k\right)}},$$

where $\hat{P}^S(k)$ is the optimal scheduling probability of user $k$, and 
$$\hat{R}_{SUM} = \frac{1-P_{out}}{\displaystyle\sum_{k=1}^{K} \frac{1}{\log\left(1+\alpha_k\right)}}$$

is the optimal sum-rate.

16. The method of claim 15, **characterized in that**:

- let $\widetilde{P}_k^{\,S} = \dfrac{1}{N_W} \sum_{t=0}^{T} e^{\frac{t-T}{N_W}} s_k\left(t\right)$ the actual scheduling probability of user $k$ averaged over a time window of

$N_w$ time slots with an exponential weight function, where T is the time-index of the present time slot and $s_k(t)$ is a variable equal to 1 if user $k$ is scheduled in time slot t, and equal to 0 if user $k$ is not scheduled in time slot t;

- the scheduling probability $\tilde{P}_k^{\,S}(t)$ can be iteratively updated as in the following:

$$\widetilde{P}_k^{\,S}(t) = \left(1 - \frac{1}{N_W}\right)\widetilde{P}_k^{\,S}(t-1) + \frac{1}{N_W}s_k(t).$$

**17.** The method of claim 16, **characterized in that** users are scheduled in time slot T according to

$$k_m^*(T) = \operatorname*{arg\,min}_{k_m^*(T)\in S_m(T)}\left\{\sum_{k=1}^{K}\left|\widetilde{P}_k^{\,S}(T) - \hat{P}_k^{\,S}\right|\right\}, \quad \text{where} \quad k_m^*(T) \text{ is a user scheduled on beam } m \text{ at time slot T and}$$

$S_m(T)$ is the set of users that give feedback on beam $m$ at time slot T.

**18.** The method of claim 17, **characterized in that** the base station performs the steps of:

1. evaluating the set of said optimal scheduling probabilities $\left\{\hat{P}_k^{S}\right\}$;

2. scheduling on each beam said user $k_m^*(T)$;

3. updating said actual scheduling probability $\widetilde{P}_k^{S}(T)$ of user $k$;

4. repeating from step 2 on next time slot excepting for repeating from step 1 if a significant change in $\{\rho_k\}$ is occurred within last time slot.

**19.** The method of claim 1, **characterized in that** every mobile stations (MS) can optionally compute a lower-bound $\tilde{\alpha}_k$ in closed-form for the SINR threshold $\alpha_k$, valid when a reporting user over the m-th beam is randomly selected by the base station (BS, using the following expression:

$$\tilde{\alpha}_k(P_{out}) = -\frac{\log\left(1 - P_{out}^{\frac{1}{KN}}\right)}{M + \frac{1}{\rho_k} - 1} < \alpha_k(P_{out}) \quad .$$

**20.** The method of claim 1, **characterized in that** the base station (BS) can optionally compute a lower-bound $\tilde{\alpha}_k$ in closed-form for the SINR threshold $\alpha_k$, valid when it randomly selects a reporting user over the m-th beam, using the following expression:

$$\tilde{\alpha}_k(P_{out}) = -\frac{\log\left(1 - P_{out}^{\frac{1}{KN}}\right)}{M + \frac{1}{\rho_k} - 1} < \alpha_k(P_{out}) \quad .$$

**21.** The method of claim 19 or 20, **characterized in that** that a lower-bound for the sum-rate is obtained by the following expression:

$$R_{SUM}^{L} = \sum_{k=1}^{K} M \frac{1-P_{out}}{K} \log\left(1 - \frac{\log\left(1 - P_{out}^{\frac{1}{KN}}\right)}{M + \frac{1}{\rho_k} - 1}\right).$$

**22.** The method of claim 21, **characterized in that** that said lower-bounded sum-rate $R_{SUM}^{L}$ is asymptotically maximized when the number of users $K \to \infty$ assuming

$$P_{out} = \frac{1}{K}.$$

**23.** The method of claim 21, **characterized in that** when the number of users $K$ is large but finite said lower-bounded sum-rate $R_{SUM}^{L}$ is numerically maximized using the following expression: $R_{SUM}^{L} = M\left(1 - P_{out}\right) \log\log\left(-\frac{K}{\log\left(P_{out}\right)}\right).$

# System model

Data stream 1 → \
← Feedback 1 \
1 ⋮ $N_1$ \
$MS_1$

Data stream 2 → \
← Feedback 2 \
1 ⋮ $N_2$ \
$MS_2$

BS \
1 ⋮ M

Data stream M → \
← Feedback M \
1 ⋮ $N_M$ \
$MS_M$

Data stream 1 → \
← Feedback K \
1 ⋮ $N_K$ \
$MS_K$

# Fig. 1

## Comparison of the sum-rate of EP with a RS corresponding to the $P_{out}$ given by Eq.19

$$M = 4; \quad N_k = 4; \quad \rho_k = [0..20] \text{ dB}$$

LEGENDA

| | | | | | |
|---|---|---|---|---|---|
| Ⓐ | K = 10 | Ⓔ | K = 200 | ◯ | $P_{out}$ by Eq.19 |
| Ⓑ | K = 20 | Ⓕ | K = 500 | ✳ | $P_{out}$ by Eq.20 |
| Ⓒ | K = 50 | Ⓖ | K = 1000 | ☐ | Optimal $P_{out}$ |
| Ⓓ | K = 100 | | | | |

Fig. 2

## Average Sum-Rate with homogeneous channel gains

$M = 4; \ N_k = 4; \ \rho_k = 10 \ dB$

Fig. 3

LEGENDA

| | |
|---|---|
| ─★─ | EP + PRS (Eq.22) |
| ─☐─ | EP + PRS (Eq.21) |
| ─── | EP + RS (Eq.22) |
| ─▽─ | Opport. SDMA [iii] |
| ─☐─ | Dumb Ant [ii] |
| ─◇─ | Single Ant [i] |

# Average Sum-Rate with heterogeneous channel gains

$$M = 4; \quad N_k = 4; \quad \rho_k = [0..20] \text{ dB}$$

LEGENDA

| | |
|---|---|
| ─★─ | EP + PRS (Eq.22) |
| ─▣─ | EP + PRS (Eq.21) |
| ─── | EP + RS (Eq.22) |
| ─▽─ | Opport. SDMA [iii] |
| ─□─ | Dumb Ant [ii] |
| ─◇─ | Single Ant [i] |

Fig. 4

## Normalized Rate Deviation (NRD) with
## heterogeneous channel gains

$M = 4;\ N_k = 4;\ \rho_k = [0..20]\ dB$

LEGENDA

| | |
|---|---|
| ★ | EP + PRS (Eq.22) |
| ▫ | EP + PRS (Eq.21) |
| — | EP + RS (Eq.22) |
| ▽ | Opport. SDMA [iii] |
| ☐ | Dumb Ant [ii] |
| ◇ | Single Ant [i] |

Fig. 5

# Comparison curves of Eq.35 and Eq.37

$\phi = 0.7; \quad N = 4$

LEGENDA

— Eq.35: $(1/K)^{\phi/KN}$

-·-·- Eq 37: $1 - \phi \log(K)/KN$

Fig. 6

| European Patent Office | EUROPEAN SEARCH REPORT | Application Number EP 06 42 5729 |
| --- | --- | --- |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| D,A | GESBERT D ET AL: "How much feedback is multi-user diversity really worth?" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 234-238, XP010709995 ISBN: 0-7803-8533-0 * page 234, left-hand column, paragraph 1 * * page 234, right-hand column, paragraph 3 - page 236, left-hand column, paragraph 1 * * page 237, right-hand column, paragraph 3 * | 1,2 | INV. H04B7/06 H04B17/00 |
| D,A | SHARIF M ET AL INSTITUTE OF ELECTRICAL AND ELECTRONICS ENGINEERS: "On the capacity of MIMO broadcast channel with partial side infonnation" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY : IEEE, US, vol. VOL. 1 OF 2. CONF. 37, 9 November 2003 (2003-11-09), pages 958-962, XP010702434 ISBN: 0-7803-8104-1 * page 958, left-hand column, paragraph 1 * * page 958, left-hand column, paragraph 3 - page 960, left-hand column, paragraph 1 * | 1,2 | TECHNICAL FIELDS SEARCHED (IPC) H04B G06Q |

-----

-----

-/--

The present search report has been drawn up for all claims

| Place of search | Date of completion of the search | Examiner |
| --- | --- | --- |
| The Hague | 18 April 2007 | LOPEZ MARQUEZ, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 06 42 5729

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/181833 A1 (LEE YONG-HWAN [KR] ET AL) 18 August 2005 (2005-08-18)<br>* abstract *<br>* page 2, paragraph 17 - paragraph 21 *<br>* page 4, paragraph 41 - paragraph 45 *<br>* page 5, paragraph 54 *<br>* figure 6 *<br>----- | 1,2 | |
| A | US 2006/221920 A1 (GOPALAKRISHNAN PRAVEEN [US] ET AL) 5 October 2006 (2006-10-05)<br>* page 3, paragraph 45 *<br>* page 4, paragraph 49 *<br>* page 6, paragraph 84 - paragraph 85 *<br>* page 12, paragraph 208 - page 13, paragraph 209 *<br>* figures 2,11 *<br>----- | 1,2 | |

TECHNICAL FIELDS SEARCHED (IPC)

The present search report has been drawn up for all claims

| Place of search | Date of completion of the search | Examiner |
|---|---|---|
| The Hague | 18 April 2007 | LOPEZ MARQUEZ, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 42 5729

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2007

| Patent document cited in search report | Publication date | Patent family member(s) | Publication date |
|---|---|---|---|
| US 2005181833 A1 | 18-08-2005 | EP 1716646 A1<br>WO 2005078958 A1<br>KR 20050081040 A | 02-11-2006<br>25-08-2005<br>18-08-2005 |
| US 2006221920 A1 | 05-10-2006 | NONE | |

EPO FORM P0459

For more details about this annex : see Official Journal of the European Patent Office, No. 12/82